# EUROPEAN PATENT APPLICATION

(11) **EP 2 412 936 A1**
(43) Date of publication of application: **01.02.2012**
(21) Application number: 11176062.5
(22) Date of filing: 29.07.2011
(51) Int. Cl.: F01D 17/08, F01D 17/04, F01D 17/16, F01D 15/10, G05B 17/02, F01K 13/02

(54) **Method for managing a primary reserve margin in an electric power generation plant and electric power generation plant**

(30) Priority: 29.07.2010 IT MI20101428
(71) Applicant: Ansaldo Energia S.p.A., Genova (IT)
(72) Inventor: Pesce, Paolo, 16152 Genova (IT); Alecci, Marco, 16129 Genova (IT); Cacciacarne, Stefano, 16148 Genova (IT)
(74) Representative: Jorio, Paolo

(57) **Abstract**

A method for managing the primary reserve margin in an electric power generation plant including a gas turbine (5) envisages determining an estimate (W_{TGMAX}) of maximum power suppliable by the gas turbine (5) and subtracting a margin (MRP) of the estimate, for determining the estimated maximum power reference (W_{TGMAX}^{*}) for the gas turbine (5). An actual power reference (W_{TG}^{*}) is then determined, not greater than the estimated maximum power reference. To determine the estimate, the actual power (W_{A}) delivered through the gas turbine (5) is measured, therefore a first power contribution (W_{IGV}), related to a difference between a current position and a reference position of IGV (2a) of a compressor (2) of the gas turbine, and a second power contribution (W_{TE}), related to a difference between a current temperature and a reference temperature of the exhaust gases, are summed to the actual power (W_{A}).

## Description

The present invention relates to a method for managing the primary reserve margin in an electric power generation plant and an electric power generation plant.

As known, the current regulations governing production and distribution of electric power require operators to maintain operating reserve margins to intervene, when necessary, in frequency regulation of systems consisting in production plants, by a distribution network and by users connected to the network. In addition to the predictable load variations being normally determined by user requests with for example daily or seasonal frequency, it is sometimes necessary to cope with sudden load changes that in the absence of countermeasures, may cause instability in the distribution and, in critical cases, network collapse.

More precisely, the required reserve margin, also referred to as primary reserve margin, is a percentage of the maximum power suppliable by a plant, which must be kept available and effectively supplied only in case of changes in network frequency. The primary reserve margin has the function to support and maintain the network frequency in case of rapid variations in power consumption.

The working point of the plant (i.e. the reference value for the power supplied by the plant towards the network) must therefore be set up to ensure the primary reserve margin.

Given that the management of the primary reserve margin in reality "freezes" a portion of power actually available, thus rendering it unusable, there is an obvious interest in limiting said margin required by regulations, by optimizing the exploitation of the plant without failing to meet legal obligations.

However, this goal is very difficult to achieve in use since the maximum power that the plant is capable of delivering must be known with a certain precision, in order to establish the existing reserves with respect to the current working point. The maximum power varies, however, depending on environmental conditions (pressure, temperature) and is also affected by the aging and wear of components.

To date, management of the primary reserve margin is assigned to operators who manually set a limit to the power suppliable from the plant, taking into account a required load plan, weather forecasts (environment temperature and pressure) for the period corresponding to the load plan and of an estimate of the functioning state of the plant (aging, wear and maintenance).

The definition of the primary reserve margin is therefore largely uncertain.

The aim of the present invention is therefore to provide a method for managing the primary reserve margin in an electric power generation plant and an electric power generation plant that overcomes the described limitations.

According to the present invention, a method is implemented for managing the primary reserve margin in an electric power generation plant and an electric power generation plant is made as defined respectively in claims 1 and 10.

The present invention will now be described with reference to the annexed drawings, which illustrate a non limitative embodiment, in which:
- Figure 1 is a simplified block diagram of an electric power generation plant according to an embodiment of the present invention;
- Figure 2 is a more detailed block diagram of a portion of a control apparatus incorporated in the plant of figure 1;
- Figure 3 is a more detailed block diagram of a component of the control apparatus of Figure 2.

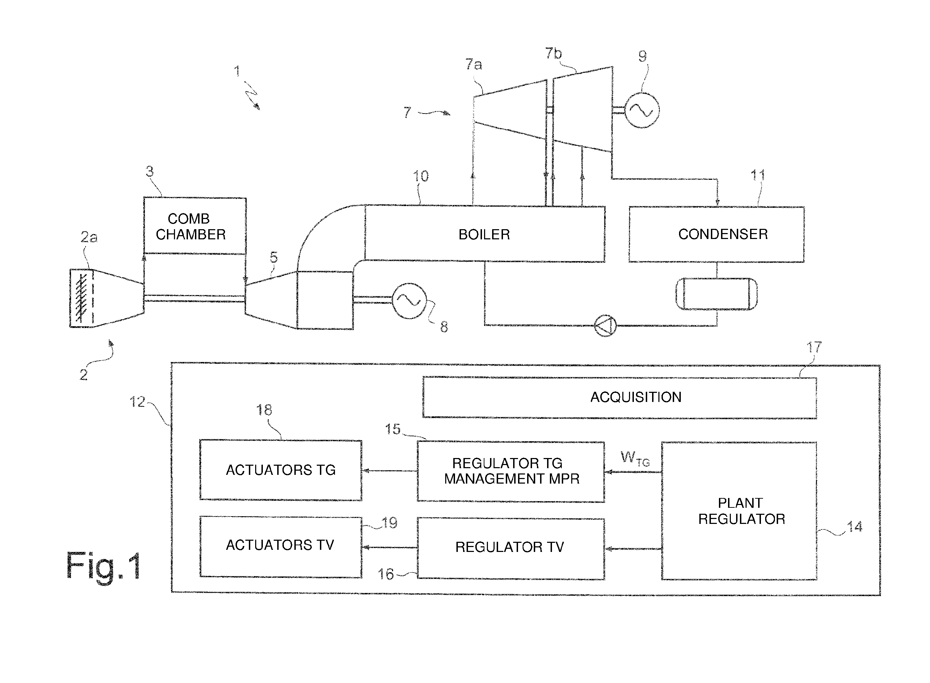

As shown in Figure 1, a combined cycle power generation plant comprises a compressor 2, a combustion chamber 3, a gas turbine 5, a steam turbine 7, two alternators 8, 9, respectively coupled to the gas turbine 5 and to the steam turbine 7 and connected to a distribution network (not shown), a recovery boiler 10, which operates as a steam generator, a condenser 11 and a control apparatus 12.

The compressor 2 draws a flow of air from the outside through a suction pipe not shown, and feeds it to the combustion chamber 3. The intake air flow is adjustable through a first stage of adjustable stator blades or IGV ("Inlet Guide Vanes") 2a.

The gas turbine 5 is coupled to the combustion chamber 3 to receive and expand a flow rate of exhaust gas. The exhaust gases of the gas turbine 5 are conveyed to the recovery boiler 10 and are used for producing steam.

The steam turbine 7, which in the described example comprises a high-pressure section 7a and a medium-low pressure section 7b, receives high pressure and low-medium pressure steam flow rates from the recovery boiler 10 and provides a steam flow rate to the condenser 11 through the exhaust medium-low pressure section 7b and through a by-pass system of a known type and not shown here for simplicity.

The condenser 11 is an air (forced ventilation) type. By means of a controlled flow of forced cooling air, the condenser 11 cools the steam received by the steam turbine, causing its condensation.

The control apparatus 12 comprises a plant regulator 14, a gas turbine regulator 15, a steam turbine regulator 16 and an acquisition interface 17 to receive from sensors and transducers (known and not shown) of the plant 1 size measurements indicative of the state of the plant 1 itself.

The plant regulator 14 determines a reference (set-point) of the overall power W_{M} for the entire plant 1 and, also, determines a partial reference power W_{TG} for the gas turbine 5, by subtracting from the reference of the overall power W_{M} the power supplied by the steam turbine 7 (the steam turbine 7 normally operates under "sliding pressure" conditions and is not partialized)

The gas turbine regulator 15 receives the partial reference power W_{TG} and acts on the actuators 18 so that the gas turbine 5 provides the required power. In particular, the actuators 18 (not illustrated in detail) for the gas turbine 5 comprise an actuator to determine the orientation of the IGV 2a of the compressor 2 and an actuator to determine the opening degree of a fuel supply valve ("fuel valve", not shown) to the combustion chamber 3. During normal operation, the steam turbine regulator 16 is inactive and acts on the steam turbine 7 by means of actuators 19 substantially only during startup procedures or in response to abnormal operating conditions (for example, in case of blocking).

The gas turbine regulator 15, also, modifies if necessary, the partial power reference W_{TG} so as to ensure a primary reserve margin MRP for the primary regulation of frequency, i.e. the margin of power that the plant 1 must maintain available if necessary for adjusting the primary regulation of frequency of the network 9. The primary reserve margin MRP is assigned entirely to the gas turbine 5 since the response times are much faster with respect to the steam turbine 7 (tens of seconds, compared to several minutes).

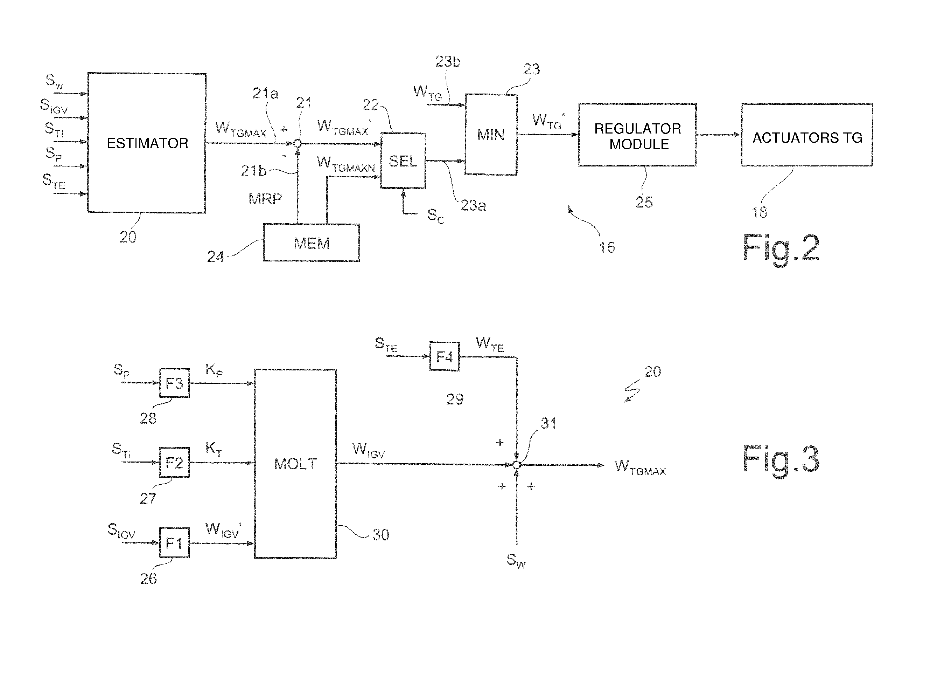

With reference to Figure 2, the regulator of the gas turbine 15 comprises an estimator module 20, a subtracter node 21, a controlled selection means 22, a minimum gate 23, a regulator module 25 and a programmable memory module 24.

The estimator module 20 receives measurement signals from the acquisition interface 17 and uses them for determining an estimate W_{TGMAX} of maximum power, indicative of the maximum power that the gas turbine 5 is capable of delivering in current operating conditions. In particular, the estimator module 20 receives a measurement of power S_{w}, indicative of the actual power W_{A} currently delivered by the plant 1 by way of the gas turbine 5; a position measurement IGV S_{IGV}, indicative of a current position of the IGV; a first temperature measurement S_{TI}, indicative of the intake air temperature of the compressor 2; a pressure measurement S_{P}, indicative of the air pressure at the entrance of the compressor 2; and a second temperature measurement S_{TE}, indicative of the exhaust gas temperature of the gas turbine 5. In one embodiment, the measured actual power W_{A} is the mechanical power of the shaft of the gas turbine 5. In a different embodiment, the measured actual power W_{A} is the electric active power effectively delivered by the alternator 8 coupled to the gas turbine 5.

The subtracter node 21 receives respectively the estimate W_{TGMAX} of maximum power from the estimator module 20, to a minuend input 21a, and the primary reserve margin MRP, stored in the memory element 24, to a subtrahend input 21b.

The output of the subtracter node 21 provides to an input of the controlled selection means 22 an estimated maximum power reference W_{TGMAX}^{*} for the gas turbine 5. The estimated maximum power reference W_{TGMAX}^{*} is indicative of the maximum power that the gas turbine 5 can provide, while maintaining the primary reserve margin MRP for the primary regulation of frequency.

A further input of the controlled selection means 22 receives a nominal maximum power reference W_{TGMAXN}, stored in the memory element 24. The nominal maximum power reference W_{TGMAXN} is indicative of the maximum power deliverable from gas turbine 5 in optimal operating conditions.

By way of a control signal S_{C}, the plant regulator 14 commands the controlled selection means 22 so that on the output of the controlled selection means 22 is transmitted the estimated maximum power reference W_{TGMAX}^{*} during normal operation of the plant 1 and the nominal maximum power reference W_{TGMAXN} during function in primary frequency regulation.

The minimum gate 23 has an input 23a connected to the output of the controlled selection means 22 to receive one amongst the estimated maximum power reference W_{TGMAX}^{*} and the nominal maximum power reference W_{TGMAXN}, under the conditions of the plant 1; and a input 23b connected to the plant regulator 14 (not shown in Figure 2), to receive the first power reference W_{TG}.

The minimum gate 23 provides to the regulator module 25 an actual power reference W_{TG}^{*} which is given at every moment by the minimum, the first reference power W_{TG} and the selected reference power by the controlled selection means 22 amongst the estimated maximum power reference W_{TGMAX}^{*} and the nominal maximum power reference W_{TGMAXN.}

The regulator module 25 is of a known type (e.g. based on a proportional-integral regulator) and acts on the actuators 18 of the gas turbine 5 so that the power actually delivered through the gas turbine 5 is maintained around actual power reference W_{TG}^{*}. The regulator can also operate in a known way as a limiter for significant quantities of the gas turbine 5 (for example for the exhaust temperature), using signals provided by the acquisition interface 17.

In ordinary operational conditions, the plant 1 is not involved in the primary regulation of frequency. The plant regulator 14 acts on the controlled selection means 22 so as to select the estimated maximum power reference W_{TGMAX}^{*}, which, as mentioned earlier, is an estimate of the maximum power that the gas turbine 5 is actually capable of delivering in the current operating conditions, maintaining the primary reserve margin MRP for the primary regulation of frequency.

The minimum gate 23 determines the actual power reference W_{TG}^{*} based on the minimum between the estimated maximum power reference W_{TGMAX}^{*} and the first actual power reference W_{TG}^{*} determined by the plant regulator 14 for the gas turbine 5. Substantially, the maximum reference power supplied to the module regulator 25 is automatically limited by the gas turbine regulator 15 so that the primary reserve margin MRP is thereby available. Therefore, the intervention of operators for fixing the primary reserve margin is not necessary.

But when the plant 1 functions in primary frequency regulation, the plant regulator 14 acts on the controlled selection means 22 to select the nominal maximum power reference W_{TGMAXM}.In this way, the minimum gate 23 therefore transmits the first power reference W_{TG} determined by the plant regulator 14 and the actual request power is made available.

Figure 3 shows in more detail the estimator module 20, which is configured to estimate the maximum power suppliable by the gas turbine 5 in the current operating conditions from the actual power W_{TA} actually supplied, the orientation of the IGV 2a of the compressor 2 and the difference between gas temperature at discharge from the gas turbine 5 with respect to a reference temperature.

In one embodiment, in particular, the estimator module 20 comprises processing stages 26, 27, 28, 29, a multiplier node 30 and a summing node 31.

The processing stages 26, 27, 28 and the multiplier node 30 determine a first residual power contribution W_{IGV} due to the difference between the current position of the IGV 2a and the maximum opening position. The first residual power contribution W_{IGV} is the power still available for the fact that the IGV 2a are not in the fully open position, to which the maximum delivered power corresponds. In the fully open position of the IGV 2a, the first residual power contribution W_{IGV} is zero.

More specifically, the processing stage 26 determines, using a function F1, a base contribution W_{IGV'}. The processing stages 27, 28 apply respective weight functions F2, F3 to the first temperature measurement S_{TI} and to the pressure measurement S_{P} for respectively determining a temperature correction coefficient K_{T} and a pressure correction coefficient K_{P}.

The base contribution W_{IGV}^{*}, the temperature correction coefficient K_{T} and the pressure correction coefficient K_{P} are fed to the multiplier node 30, which calculates the first residual power contribution W_{IGV} notifying it to the summing node 31. Substantially, the estimator module 20 uses the temperature correction coefficient K_{T} and the pressure correction coefficient K_{P} for correcting the base contribution W_{IGV}^{*} as a function of the current environmental conditions (temperature and air pressure).

The processing stage 29 determines, by way of a function F4, a second residual power contribution W_{TE}, due to the difference between the actual temperature of the exhaust gases of the gas turbine 5 and a reference temperature. The second residual power contribution W_{TE} is the power still available for the fact that the actual temperature of the exhaust gases is lesser than the reference temperature. In one embodiment, the reference temperature is a temperature of the exhaust gases under baseload conditions and the processing stage 29 determines the second residual power contribution W_{TE} by multiplying the difference between the actual temperature of the exhaust gases and the reference temperature by a coefficient. In one non limitative example, the coefficient is 0.6 MW /^{o}C.

The first residual power contribution W_{IGV} (corrected as a function of the temperature and pressure of the current environment) and the second residual power contribution W_{TE} are supplied to the summing node 31 and summed to the power measurement S_{w} to determine the estimate W_{TGMAX} of maximum power that is supplied to the controlled selection means 22, as described above.

The estimate W_{TGMAX} of maximum power serves to fix the actual power reference W_{TG}^{*} so as to ensure the primary reserve margin MRP, as described with reference to Figure 2. To determine the estimate W_{TGMAX} of maximum power, the estimator module 20 sums the measurement of power S_{w}, relative to the actual power delivered, and the residual margins not delivered by effect of the adjustment, with respect to the conditions for maximum power. In particular, the estimator module 20 utilizes the contributions due to the incomplete opening of the IGV 2a and to the exhaust temperature difference compared to the reference temperature. The power measurement S_{w} reflects the actual operating conditions of the plant 1 and gives an account, not only of the environmental conditions of temperature and pressure, but also of the state of all components which collaborate to define the delivered power. The undelivered residual margins due to the adjustment can be determined with high accuracy and therefore also the estimate W_{TGMAX} of maximum power, i.e. the estimate of the maximum power that the gas turbine 5 is capable of delivering in actual operating conditions is extremely accurate. The control device 12 is therefore able to handle in a fully automatic way the primary reserve margin and limiting the minimum necessary amount of "frozen" energy, while ensuring that legal requirements are met. The exploitation of the plant 1 is thus improved overall.

It is also clear that to the described method and plant modifications and variations can be made, without going beyond the scope of the present invention, as defined in the appended claims.

## Claims

1. Method for managing a primary reserve margin in an electric power generation plant, wherein the plant (1) includes a gas turbine (5); the method comprising:
determining an estimate (W_{TGMAX}) of a maximum power deliverable by the gas turbine (5);
subtracting a primary reserve margin (MRP) from the estimate (W_{TGMAX}) for determining an estimated maximum power reference (W_{TGMAX}^{*}) for the gas turbine (5); and
in one operating condition, determining an actual power reference (W_{TG}^{*} ) for the gas turbine (5) so that the actual power reference (W_{TG}^{*}) is not greater than the estimated maximum power reference (W_{TGMAX}^{*});
the method being **characterized in that** determining the estimate (W_{TGMAX}) comprises:
determining a power measurement (S_{W}), indicative of an actual power (W_{A}) supplied by the plant (1) through the gas turbine (5);
determining a first power contribution (W_{IGV}), correlated to a difference between a current position of adjustable blades (2a) of a compressor (2) coupled to the gas turbine (5) and a reference position of the adjustable blades (2a);
determining a second power contribution (W_{TE}), correlated to a difference between a current temperature of the exhaust gas of the gas turbine (5) and a reference temperature of the exhaust gas of the gas turbine (5); and
adding the first power contribution (W_{IGV}) and the second power contribution (W_{TE}) to the power measurement (S_{W}).

2. Method according to claim 1, wherein determining the first power contribution (W_{IGV}) comprises determining a base contribution (W_{IGV}^{*}) as a function of the current position of the adjustable blades (2a) of the compressor (2).

3. Method according to claim 2, wherein determining the first power contribution (W_{IGV}) comprises correcting the base contribution (W_{IGV}^{*}) as a function of an air temperature at the intake of the compressor (2).

4. Method according to claim 3, wherein correcting the first power contribution (W_{IGV}) comprises determining a temperature correction coefficient (K_{T}) as a function of the air temperature at the intake of the compressor (2) and applying the temperature correction coefficient (K_{T}) to the base contribution (W_{IGV}^{*}).

5. Method according to any one of claims 2 to 4, wherein determining the first power contribution (W_{IGV}) comprises correcting the base contribution (W_{IGV}^{*}) as a function of an air pressure at the intake of the compressor (2).

6. Method according to claim 5, wherein correcting the first power contribution (W_{IGV}) comprises determining a pressure correction coefficient (K_{P}) as a function of the air pressure at the intake of the compressor (2) and applying the pressure correction coefficient (K_{P}) to the base contribution (W_{IGV}^{*}).

7. Method according to any one of the foregoing claims, comprising determining a gas turbine power reference (W_{TG}) and wherein determining the actual power reference (W_{TG}^{*}) comprises selecting the least of the gas turbine power reference (W_{TG}) and the estimated maximum power reference (W_{TGMAX}^{*}) in the operating condition.

8. Method according to any one of the foregoing claims, wherein the reference position of the adjustable blades (2a) is a maximum opening position.

9. Method according to any one of the foregoing claims, wherein the reference temperature of the exhaust gas of the gas turbine (5) is a baseload temperature.

10. Electric power generation plant comprising:
a compressor (2), having a stage of adjustable stator blades (2a);
a gas turbine (5); and
a regulator (14, 15), coupled to the gas turbine (5);
wherein the regulator (14, 15) comprises:
an estimator module (20), configured to determine an estimate (W_{TGMAX}) of a maximum power deliverable by the gas turbine (5);
a subtracter (21), for subtracting a primary reserve margin (MRP) from the estimate (W_{TGMAX}) and determining an estimated maximum power reference (W_{TGMAX}^{*}) for the gas turbine (5); and
selection means (22, 23), for determining, in one operating condition, an actual power reference (W_{TG}^{*}) for the gas turbine (5) so that the actual power reference (W_{TG}^{*}) is not greater than the estimated maximum power reference (W_{TGMAX}^{*});
**characterized in that** the estimator module (20) comprises:
an acquisition interface (17), configured to determine a power measurement (S_{W}), indicative of an actual power (W_{A}) supplied by the plant (1) through the gas turbine (5);
first calculation means (26, 27, 28, 30), configured to determine a first power contribution (W_{IGV}), correlated to a difference between a current position of adjustable blades (2a) of a compressor (2) coupled to the gas turbine (5) and a reference position of the adjustable blades (2a);
second calculation means (29), configured to determine a second power contribution (W_{TE}), correlated to a difference between a current temperature of the exhaust gases of the gas turbine (5) and a reference temperature of the exhaust gases of the gas turbine (5); and
a summer (31), for summing the first power contribution (W_{IGV}) and the second power contribution (W_{TE}) to the power measurement (S_{W}).

11. Plant according to claim 10, wherein the first calculation means (26, 27, 28, 30) comprise a first processing stage (26) configured to determine a base contribution (W_{IGV}^{*}) as a function of the current position of the adjustable blades (2a) of the compressor (2).

12. Plant according to claim 11, wherein the first calculation means (26, 27, 28, 30) comprise a second processing stage (27), configured to correct the base contribution (W_{IGV}^{*}) as a function of an air temperature at the intake of the compressor (2).

13. Plant according to claim 12, wherein the first calculation means (26, 27, 28, 30) comprise a third processing stage (28), configured to correct the base contribution (W_{IGV}^{*}) as a function of an air pressure at the intake of the compressor (2).

14. Plant according to any one of claims 10 to 13, wherein the reference position of the adjustable blades (2a) is a maximum opening position.

15. Plant according to any one of claims 10 to 14, wherein the reference temperature of the exhaust gases of the gas turbine (5) is a baseload temperature.
